# EUROPEAN PATENT SPECIFICATION

(11) **EP 3 476 722 B1**
(45) Date of publication and mention of the grant of the patent: **04.12.2019**
(21) Application number: 18151295.5
(22) Date of filing: 11.01.2018
(51) Int. Cl.: B64C 11/06, B64C 27/57, B64C 29/00, B64C 27/605, B64C 13/16, B64C 27/26, B64C 27/72, B64C 11/30, B64C 27/28, G05D 1/08

(54) **TILT ROTOR FLAP WHIRL STABILITY CONTROL WITH HUB SHEAR FEEDBACK FOR HIGH SPEED AIRCRAFT**
KIPPROTORKLAPPENWIRBELSTABILITÄTSREGELUNG MIT NABENSCHERRÜCKMELDUNG FÜR HOCHGESCHWINDIGKEITSFLUGZEUG
CONTRÔLE DE LA STABILITÉ AU TOURBILLONNEMENT DES VOLETS D'UN ROTOR BASCULANT COMPORTANT UNE RÉTROACTION DE CISAILLEMENT DU MOYEU POUR AÉRONEF À GRANDE VITESSE

(30) Priority: 24.10.2017 US 201715792430
(43) Date of publication of application: 01.05.2019
(73) Proprietor: Bell Helicopter Textron Inc., Fort Worth, TX 76101 (US)
(72) Inventor: KIM, Sung, Bedford, TX Texas 76021 (US); CHOI, Jouyoung Jason, Southlake, TX Texas 76092 (US); STAMPS, Frank Bradley, Colleyville, TX Texas 76034 (US)
(74) Representative: Barker Brettell LLP

(56) References cited:
- WO-A1-2016/123055
- US-A1- 2013 105 637
- SHAW J ET AL: "HIGHER HARMONIC CONTROL: WIND TUNNEL DEMONSTRATION OF FULLY EFFECTIVE VIBRATORY HUB FORCE SUPPRESSION", JOURNAL OF THE AMERICAN HELICOPTER SOCIETY, AMERICAN HELICOPTER SOCIETY, ALEXANDRIA, VA, US, vol. 34, no. 1, 1 January 1989 (1989-01-01), pages 14-25, XP000002995, ISSN: 0002-8711, DOI: 10.4050/JAHS.34.14
- D. ROTH: "ADVANCED VIBRATION REDUCTION BY IBC TECHNOLOGY", 30TH EUROPEAN ROTORCRAFT FORUM : 14TH - 16TH SEPTEMBER 2004, MARSEILLES, FRANCE, 14 September 2004 (2004-09-14), pages 20-1, XP055453255, France

## Description

### Cross-Reference to Related Applications

Not applicable.

### Statement Regarding Federally Sponsored Research or Development

Not applicable.

### Background

Tiltrotor aircraft are generally operable in a helicopter flight mode to ascend from and/or descend to a landing area and in an airplane flight mode to propel the aircraft forward. The transition from the helicopter flight mode to the airplane flight mode, and vice versa, is generally accomplished by selectively pivoting pivotable rotor assemblies and/or pylons of the aircraft to between a horizontal orientation and a vertical orientation to change the thrust angle of the rotatable aircraft blades. When operated in the airplane mode at high speeds and/or high altitudes, tiltrotor aircraft are subject to various aeroelastic instabilities which may cause damage to the components of the aircraft and/or the aircraft itself and may induce severe vibrations throughout the fuselage of the aircraft.

Shaw, J. et al: "Higher Harmonic Control: wind tunnel demonstration of fully effective vibratory hub force suppression" discloses a Closed-loop Higher Harmonic Control (HHC). The HHC was demonstrated on a dynamically scaled model of the three-bladed C11.47D Chinook rotor in the Boeing V/STOL Wind Tunnel. Vertical and in-plane 3/rev hub forces were suppressed simultaneously, completely, and continuously as the model was "flown" throughout a wide test envelope which included trimmed flight up to 188 knots. This multicomponent suppression was accomplished with a fixed-gain feedback control law which is much simpler and faster than the adaptive control laws used by other investigators. The controller applied small amounts of oscillatory swashplate motion to produce multiharmonic blade pitch variations up to ± 3.0 deg at very high speed. This control caused only small changes in rotor system loads and performance.

As tiltrotor aircraft continue to evolve and achieve increasing forward flight speeds and/or altitudes, the aeroelastic instabilities experienced by the aircraft may also increase. Thus, in emerging tiltrotor aircraft, controlling aeroelastic instabilities becomes increasingly important to ensure the safety, reliability, and performance of the aircraft.

### Brief Description of The Drawings

For a more complete understanding of the present disclosure and the advantages thereof, reference is now made to the following brief description, taken in connection with the accompanying drawings and detailed description.
Figure 1 is a top view of a tiltrotor aircraft configured for operation in an airplane flight mode according to this disclosure.
Figure 2 is a top view of the tiltrotor aircraft of Figure 1 configured for operation in a helicopter flight mode according to this disclosure.
Figure 3 is an oblique view of a rotor assembly according to this disclosure.
Figure 4 is a graphical representation of the effect of delta-3 (*δ*₃) angle on the rotor system of Figure 3 according to this disclosure.
Figure 5 is a graphical representation of the effect of whirl flutter on the rotor system of Figure 3 according to this disclosure.
Figure 6 is a schematic diagram of a control system according to this disclosure.
Figure 7 is a flowchart of a method of controlling a tiltrotor aircraft according to this disclosure.

### Detailed Description

In this disclosure, reference may be made to the spatial relationships between various components and to the spatial orientation of various aspects of components as the devices are depicted in the attached drawings. However, as will be recognized by those skilled in the art after a complete reading of this disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

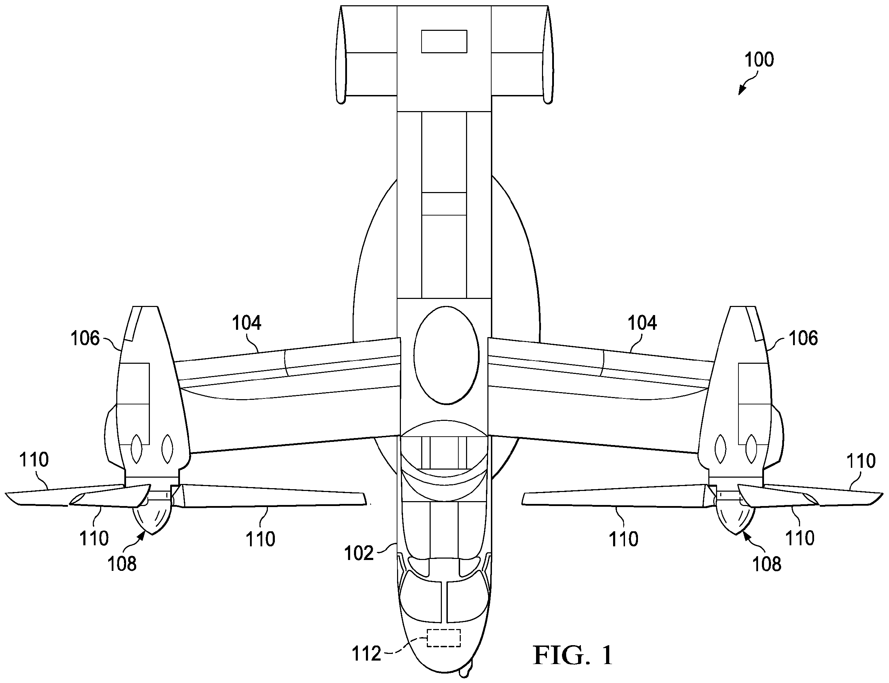

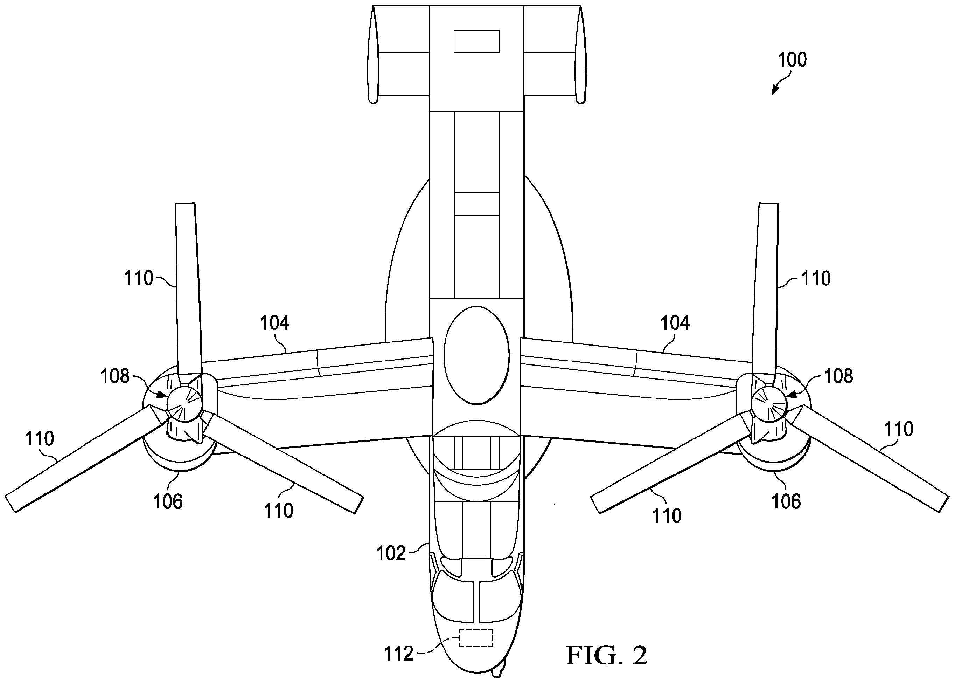

Referring now to Figures 1 and 2, top views of a tiltrotor aircraft 100 configured for operation in an airplane flight mode (hereinafter "airplane mode") and a helicopter flight mode (hereinafter "helicopter mode") are shown, respectively. The tiltrotor aircraft 100 generally comprises a fuselage 102 and a plurality of wings 104 extending from the fuselage 102. Each of the wings 104 comprises a pivotable rotor assemblies 106 having a rotor assembly 108 comprising a plurality of rotor blades 110 attached thereto. Each pivotable rotor assembly 106 may comprise an engine, gearbox, or the like configured to selectively rotate the rotor assembly 108 within each pivotable rotor assembly 106. Additionally, as will be discussed further herein, the tiltrotor aircraft 100 also comprises a flight control subsystem 112 configured to selectively control the operation, orientation, rotation, and/or position of the pivotable rotor assemblies 106, the rotor system 108, and/or the rotor blades 110 of the tiltrotor aircraft 100. Further, selective control of the operation of the tiltrotor aircraft 100 by the flight control system 112 may be at least partially automated.

In operation, each pivotable rotor assembly 106 operates to rotate the associated rotor system 108 and rotor blades 110 about an axis to generate a thrust to propel the tiltrotor aircraft 100. Additionally, the pivotable rotor assemblies 106 are selectively pivotable between a horizontal orientation and a vertical orientation with respect to the fuselage 102 and wings 104 to adjust the thrust angle and transition the tiltrotor aircraft 100 between the airplane mode and the helicopter mode. Accordingly, the airplane mode is associated with a more horizontally-oriented thrust angle and propelling the tiltrotor aircraft 100 forward in flight, while the helicopter mode is associated with a more vertically-oriented thrust angle and propelling the tiltrotor aircraft 100 to and from a landing area. Therefore, to adjust the thrust angle from more horizontal to more vertical and transition from the airplane mode to the helicopter mode, the pivotable rotor assemblies 106 may be pivoted from the horizontal orientation to the vertical orientation. To adjust the thrust angle from more vertical to more horizontal and transition from the helicopter mode to the airplane mode, the pivotable rotor assemblies 106 may be rotated from the vertical orientation to the horizontal orientation.

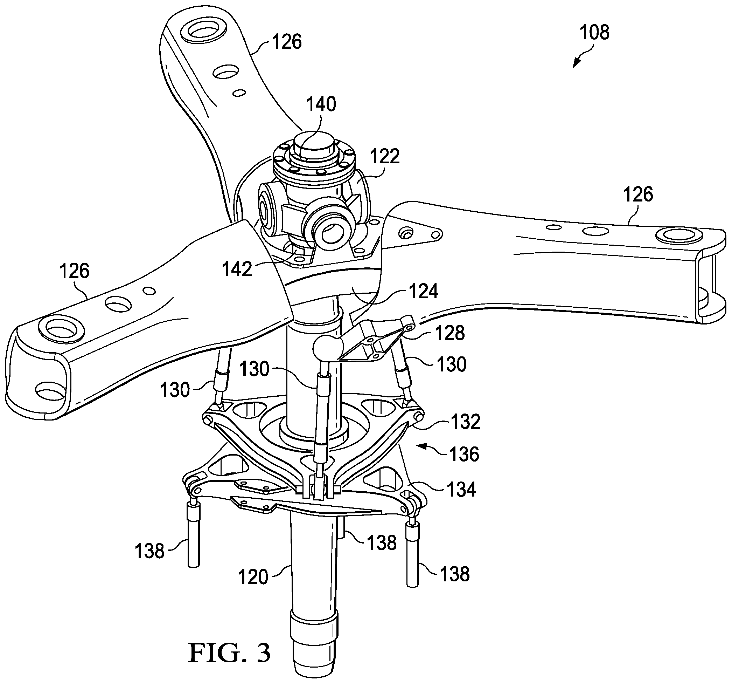

Referring now to Figure 3, an oblique view of rotor assembly 108 is shown. The rotor assembly 108 comprises a rotor mast 120 coupled to a rotor hub 122. The rotor hub 122 comprises one or more yokes 124 used to couple the plurality of rotor blades 110 shown in Figures 1 and 2 to the rotor hub 122 while allowing the blades to flap vertically in an up and down direction relative to the rotor mast 120. In some embodiments, the rotor hub 122 may also comprise a plurality of rotor grips 126. Each rotor grip 126 is configured to couple an associated rotor blade 110 to the rotor hub 122 and/or the yoke 124. Each rotor grip 126 also comprises an inward end that is operationally coupled to a pitch horn 128 that is coupled to a rotatable ring 132 of a swashplate assembly 136 as is known in the art via a pitch link 130. The swashplate assembly 136 comprises a non-rotatable ring 134 engaged with the rotatable ring 132 and configured to guide and/or alter the position, pitch, tilt, angle, orientation, and/or translation of the rotatable ring 132. Additionally, it will be appreciated that a bearing and/or other friction-reducing component may be disposed between the rotatable ring 132 and the non-rotatable ring 134 to reduce friction and maintain the engaged configuration between the rotatable ring 132 and the non-rotatable ring 134 of the swashplate assembly 136 during operation.

In the embodiment shown, the rotatable ring 132 is generally affixed to the rotor mast 120 and rotates with the rotation of the rotor mast 120, while the non-rotatable ring 134 is mounted about the rotor mast 120 and remains stationary with respect to the rotation of the rotor mast 120 and the rotatable ring 132. A plurality of actuators 138 are coupled to the non-rotatable ring 134 of the swashplate assembly 136 and a stationary component and/or portion of an tiltrotor aircraft 100 at an opposing end of each actuator 138. Each of the plurality of actuators 138 is selectively extendable and retractable to control the position, pitch, tilt, angle, orientation, and/or translation of the non-rotatable ring 134, which is then translated to the non-rotatable ring 132 to selectively adjust the pitch of each of the rotor blades 110 of tiltrotor aircraft 100. As the rotatable ring 132 rotates with the rotor mast 120, each pitch link 130 is driven up and down due to the engagement of the rotatable ring 132 with the non-rotatable ring 134. Accordingly, as the rotatable ring 132 rotates, it drives each pitch link 130, which drives each corresponding pitch horn 128 to rotate each rotor grip 126 and associated rotor blades 110. This allows the pitch of each of the rotor blades 110 to be selectively controlled.

Additionally, it will be appreciated that the selective actuation of the actuators 138 is generally controlled by an electrical signal, hydraulic input, mechanical input, and/or a combination of electrical and/or mechanical signals provided by the flight control subsystem 112 within the tiltrotor aircraft 100. Furthermore, as will be discussed later herein, the rotor system 108 comprises at least one sensor and/or gauge configured to provide feedback regarding operational characteristics of tiltrotor aircraft 100 to the flight control subsystem 112. For example, in some embodiments, the rotor system 108 may comprise at least one accelerometer 140 disposed in a shear plane of the rotor hub 122 and configured to detect destabilizing hub shears relating to whirl motion of the rotor system 108. Further, in some embodiments, the rotor system 108 may comprise at least one strain gauge 142 disposed in and/or on the rotor mast 120 also configured to detect the destabilizing hub shears relating to a whirl motion of the rotor system 108 since hub shear causes deflection and/or bending in the rotor mast 120. However, in some embodiments, the rotor system 108 may comprise at least one accelerometer 140 and one strain gauge 142.

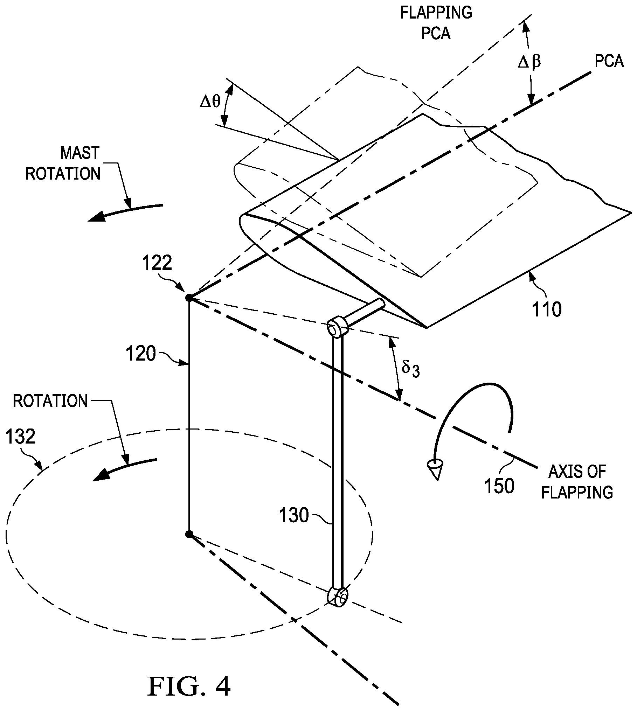

Referring now to Figure 4, a graphical representation of the effect of delta-3 (*δ*₃) angle on the rotor system 108 of Figures 1-3 is shown. Because one end of the pitch horns 128 is restrained by the pitch link 130, and the other end is attached to the rotor blade 110 via the rotor grip 126, a pitch change in the rotor blade 110 will occur as the blade flaps with respect to the flapping axis 150. Hence, the delta-3 (*δ*₃) angle produces coupling between rotor flapping and the pitch of the rotor blade 110. As the rotor blade 110 flaps upward, a rotor system 108 with a positive delta-3 (*δ*₃) angle will experience a nose-down pitch, while a rotor system 108 with a negative delta-3 (*δ*₃) angle will experience a nose-up pitch. The equation defining the pitch change caused by delta-3 (*δ*₃) is defined as: Δθ=-tan(*δ*₃)Δβ.

The pitch/flap coupling caused by the delta-3 (*δ*₃) angle alters the aerodynamic forces acting on the rotor system 108, which modifies the flapping frequency. The rotor delta-3 (*δ*₃) angle is used to reduce rotor system 108 flapping amplitudes during gust disturbances or pilot maneuvers. This prevents excessive flapping which can cause high rotor loads and mechanical interferences. However, the delta-3 (*δ*₃) angle can be adjusted by moving the location of the pitch horn 128 relative to the flapping axis 150. In traditional tiltrotor aircraft, the delta-3 (*δ*₃) angle is usually set to values near -15 degrees, which provides an adequate level of flapping attenuation. Larger values of delta-3 (*δ*₃) would reduce flapping even more, but this can aggravate the aeroelastic stability problems described above.

Because the delta-3 (*δ*₃) coupling alters the flapping frequency of a rotor system 108, it affects the basic rotor system 108 flapping response characteristics, as well as the destabilizing hub shears in the rotor hub 122. This affects both the proprotor aeroelastic instability and the rotor flap-lag instability. For the proprotor aeroelastic stability problem, large negative values of delta-3 (*δ*₃) angle will increase the magnitude of the destabilizing hub shears. The increase in negative rotor damping will reduce the stability boundary of the tiltrotor aircraft. Likewise, large positive values of delta-3 (*δ*₃) are beneficial for proprotor aeroelastic stability. Large positive values of delta-3 (*δ*₃), however, will cause the flapping frequency to increase and approach the rotor in-plane mode frequency. This can lead to a rotor flap/lag instability at high speed. Likewise, large negative values of delta-3 (*δ*₃) will improve the rotor flap/lag stability by preventing coalescence of these two rotor modes. Thus, a selected design value of delta-3 (*δ*₃) is a compromise between the requirement for acceptable flapping reduction, good proprotor aeroelastic stability, and acceptable flap/lag stability.

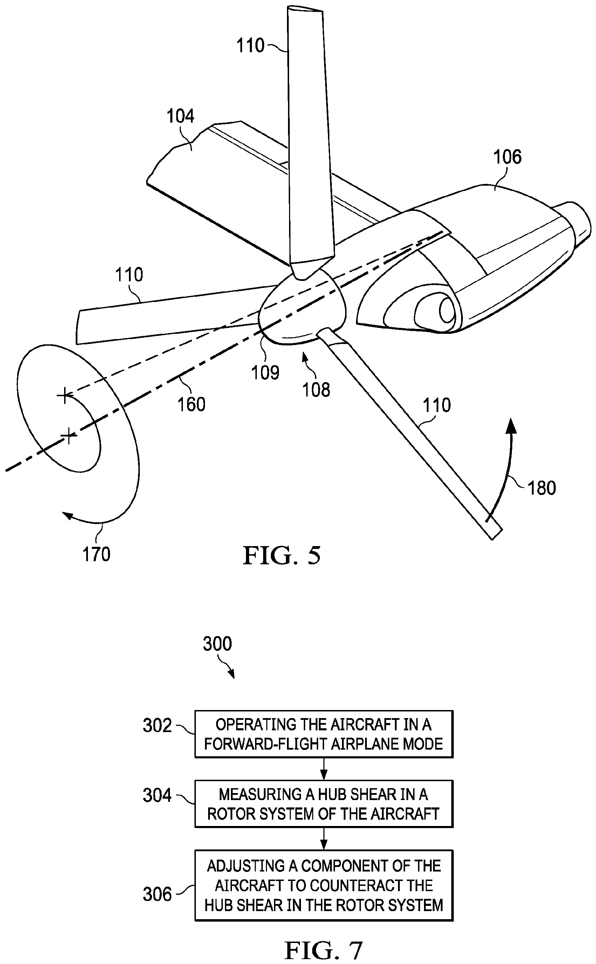

Referring now to Figure 5, a graphical representation of the effect of whirl flutter on the rotor system 108 of Figures 1-3 is shown. Whirl flutter is an example of aeroelastic instability that occurs in a rotor system 108 and/or pivotable rotor assembly 106 or portions thereof, that are affixed to a wing 104 when the tiltrotor aircraft 100 experiences chordwise airflow during the forward-flight airplane mode shown in Figure 1. Whirl flutter is characterized by the rotational deviation of a rotor nose 109 of the rotor system 108 from a static thrust axis 160. Whirl flutter may comprise a forward whirl or a backward whirl. Backward whirl is depicted in Figure 5 where the whirl direction 170 is counter to the rotation direction 180 of the rotor blades 110. Forward whirl is characterized by the whirl direction 170 being the same as the rotation direction 180 of the rotor blades 110. Additionally, whirl flutter may also induce and/or excite flapping of the wings 104 of the tiltrotor aircraft 100.

Whirl flutter may be caused by excessive in-plane or "destabilizing" hub shears, which impose a limit on the forward flight speed of a tiltrotor aircraft 100 and are induced by a variety of factors, including aerodynamic forces, high velocity airflow through rotor system 108, gyroscopic forces caused by rotor system 108, mounting stiffness of the rotor blades 110 to the rotor system 108, flapping of the rotor blades 110, in-flight disturbances such as air gusts, and/or the natural flutter frequency of the rotor blades 110 and/or the wings 104 of the tiltrotor aircraft 100. Whirl flutter may occur in both turbo-prop and tiltrotor aircraft 100. However, tiltrotor aircraft 100 are more prone to whirl flutter instability due to rotor blade 110 flapping and/or bending.

As a tiltrotor aircraft 100 operates in the forward-flight airplane mode shown in Figure 1, destabilizing hub shears may induce whirl flutter. The whirl flutter may become increasingly divergent from the thrust axis 170 if a critical velocity is reached by the tiltrotor aircraft 100. The danger in allowing the whirl flutter to increasingly diverge is that whirl flutter may become so excessive that the rotor blades 110 may contact the wing 104, causing catastrophic damage to the tiltrotor aircraft 100. However, prior to the rotor blades 110 contacting the wing 104, structural damage to components of the rotor system 108 may occur. Furthermore, since whirl flutter may also induce and/or excite flapping of the wings 104, damage to the wings 104 of the tiltrotor aircraft 100 may also result from excessive whirl flutter.

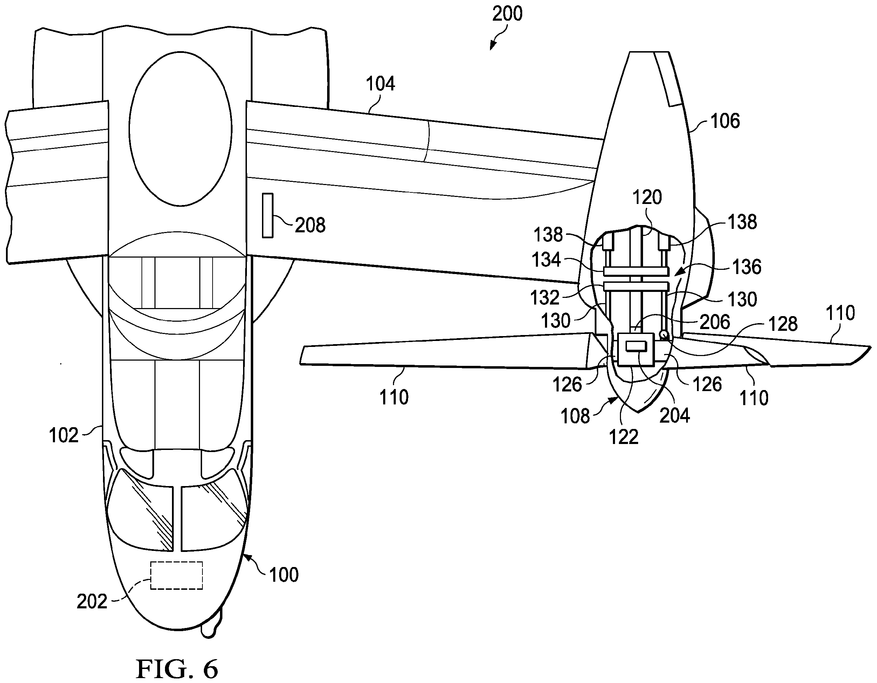

Referring now to Figure 6, a schematic diagram of a control system 200 is shown. The control system 200 is generally be configured for operation in tiltrotor aircraft 100 and configured to provide electronic stability to tiltrotor aircraft 100 through collective and/or cyclic control during operation in the forward-flight airplane mode. In some embodiments, the control system 200 is configured to provide electronic stability at flight speeds above a mechanical stability margin of the tiltrotor aircraft 100. The control system 200 comprises a flight control subsystem 202 substantially similar to flight control subsystem 112 and configured to selectively control the operation, orientation, rotation, and/or position of the pivotable rotor assemblies 106, the rotor system 108, and/or the rotor blades 110 of the tiltrotor aircraft 100. More specifically, the flight control subsystem 202 is configured to selectively operate actuators 138 coupled to the non-rotatable ring 134 of the swashplate assembly 136 to selectively control the pitch of each of the rotor blades 110 in response to feedback regarding operational characteristics of tiltrotor aircraft 100 from a plurality of sensors and/or gauges.

The control system 200 comprises at least one accelerometer 204 substantially similar to accelerometer 140 and/or at least one strain gauge 206 substantially similar to strain gauge 142 associated with each rotor system 108 of aircraft 100. The accelerometers 204 and the strain gauges 206 are configured to detect destabilizing hub shears acting on the rotor hub 122 and/or the rotor mast 120. However, in some embodiments, the accelerometers 204 and the strain gauges 206 may be configured to detect other forces indicative of the presence of destabilizing hub shears in the rotor hub 122 and/or the rotor mast 120. Additionally, in some embodiments, the control system 200 may also comprise at least one sensor 208 associated with each wing 104 and configured to detect bending moments in the wing 104 caused by flapping of the wings 104. However, in some embodiments, each wing 104 may comprise a sensor 208 on each of a top and bottom side of the wing 104. Furthermore, it will be appreciated that control system 200 may comprise any combination of accelerometers 204, strain gauges 206, and/or sensors 208.

In operation, when tiltrotor aircraft 100 travels at high forward-flight speeds and/or experiences irregular gusts of wind, the mechanical stability of the rotor system 108 may be exceeded, thereby causing the rotor system 108 to become unstable and experience whirl flutter. The instability of the rotor system 108 may be triggered by destabilizing hub shear acting on the rotor mast 120 and/or the rotor hub 122. Thus, for the control system 200 to provide electronic stability to tiltrotor aircraft 100 by controlling, reducing, and/or eliminating whirl flutter, the control system 200 is configured to detect the destabilizing hub shears. In some embodiments, the control system 200 may employ an accelerometer 204 disposed in the shear plane of each rotor hub 122 of the tiltrotor aircraft 100 to detect the destabilizing hub shears in the rotor hubs 122. The accelerometers 204 measure hub shear in the rotor hubs 122 by detecting acceleration in the shear planes of the rotor hubs 122 caused by vibrational displacement.

In some embodiments, the control system 200 may employ a strain gauge 206 disposed in and/or on each rotor mast 120 of the tiltrotor aircraft 100 to detect the destabilizing hub shears. The strain gauges 206 measure hub shears present in the rotor masts 120 by detecting deflection and/or bending in the rotor mast 120. This may be accomplished since destabilizing hub shears generate deflection and/or bending in the rotor mast 120. Additionally, in some embodiments, the control system 200 may employ a sensor 208 disposed in and/or on each wing 104 of the tiltrotor aircraft to detect bending moments present in the wings 104 of the tiltrotor aircraft 100. However, in some embodiments, each wing 104 may comprise a sensor 208 on each of a top and bottom side of the wing 104. The bending moments in the wings 104 result from flapping of the wings 104 caused by the destabilizing hub shears acting on the rotor hub 122 and/or the rotor mast 120. The phenomenon of wing 104 flapping caused by whirl flutter may be referred to as whirl flap. Thus, the destabilizing hub shears may be determined by the flight control subsystem 202 based on the values of the bending moments detected by the sensors 208. Furthermore, it will be appreciated that control system 200 may employ any combination of accelerometers 204, strain gauges 206, and/or sensors 208 to determine the destabilizing hub shears acting on the rotor mast 120 and/or the rotor hub 122.

The data sensed by the accelerometers 204, strain gauges 206, and/or sensors 208 may be communicated to the flight control subsystem 202. The flight control subsystem 202 is configured to receive data relating to the hub shears from each accelerometer 204, strain gauge 206, and/or sensor 208 in the tiltrotor aircraft 100 and analyze the data to determine operational characteristics that must be adjusted to eliminate the destabilizing hub shears. The flight control subsystem 202 comprises software and/or hardware configured to determine hub shear values from the communicated data and/or analyze the communicated data to determine if the hub shears are potentially harmful to the rotor hub 122, rotor mast 102, other components of the rotor system 108, wings 104, and/or any other component of the tiltrotor aircraft 100. Additionally, the communicated data from the gauges 204, 206 and/or sensors 208 may be further communicated and/or displayed by a display, gauges, and/or warning lights by the flight control subsystem 202 to alert a pilot as to presence of the destabilizing hub shears and/or an action taken by the flight control system 202 in response to the presence of the destabilizing hub shears. Furthermore, alerting the pilot as to the presence of the destabilizing hub shears may allow a pilot to selectively operate the flight control subsystem 202 to further adjust the pitch of the rotor blades 110, adjust the speed of the aircraft 100, and/or take other action to control, reduce, cancel, and/or eliminate the destabilizing hub shears and resulting whirl flutter. However, in some embodiments, the flight control subsystem 202 may automatically adjust the pitch of the rotor blades 110 in response to the detection of the presence of destabilizing hub shears.

The control system 200 generally comprises a fail-safe tiered control system 200 that incorporates a series of responses in response to destabilizing hub shears being detecting by at least one of the gauges 204, 206 and/or sensors 208. More specifically, the flight control subsystem 202 comprises an algorithm that utilizes the communicated data from the gauges 204, 206 and/or sensors 208 to analyze the data and initiate a tiered set of responses when the flight control subsystem 202 detects destabilizing hub shears and/or determines that the hub shears may be harmful to components of the tiltrotor aircraft 100. When a destabilizing hub shear is detected by the gauges 204, 206 and/or sensors 208, the flight control subsystem 202 may first operate the actuators 138 to tilt the swashplate assemblies 136 to adjust the pitch of the rotor blades 110 of each rotor system 108.

Additionally, when tilting the swashplate assemblies 136, the flight control system 202 may adjust the pitch of the rotor blades 110 of each rotor system 108 individually. The rotor blades 110 may be tilted at different angles with respect to other rotor blades 110 of the same rotor system 108 based on the angle the swashplate assembly 136 is tilted. More specifically, the flight control subsystem 202 may detect the hub shears and determine hub shear vibrations that result at a particular frequency and/or range of frequencies that initiate whirl flutter. The flight control subsystem 202 may determine the phase of the hub vibrations and tilt the swashplate assembly 136 in a swirling motion to dampen and/or eliminate the hub shear vibrations to stabilize the rotor systems 108. Accordingly, by detecting the hub shears and determining the characteristics of the hub shear vibrations, control system 200 provides a quicker response than traditional methods of simply sensing beam bending in the wings 104. This is due at least in part to the detected hub shears occurring locally at the rotor hub 122 and/or rotor mast 120 and being detected in real-time as opposed to waiting to detect wing bending caused by increasingly dangerous hub shears.

If attempts to control the whirl flutter created by hub shears is not successful by tilting the swashplate assemblies 136, the flight control subsystem 202 may automatically initiate the next step in the tiered set of responses by reducing engine power and/or torque to the rotor systems 108 to attempt to control whirl flutter. At the same time as reducing the engine power and/or torque, the flight control subsystem 202 may initiate collective braking by greatly increasing the pitch of the rotor blades 110 to a high collective angle (e.g. at least about 10 degrees, 15 degrees, 20 degrees, 25 degrees, 30 degrees, 35 degrees, and/or 45 degrees) to reduce the speed of rotation of the rotor systems 108. In some embodiments, the flight control subsystem 202 may reduce the speed of the rotor systems 108 to a known statically stable speed of rotation of the rotor systems 108. The additional thrust created by the high collective angle and slower rotational speed may induce whirl flutter damping in the rotor systems 108 and reduce and/or eliminate the hub shears and the associated whirl flutter.

Furthermore, the flight control subsystem 202 may utilize the algorithm to determine the stability margins of the rotor systems 108. The flight control subsystem 202 may also determine which parameters have the greatest effect on improving the determined stability margins. This allows for real-time feedback to the flight control subsystem 202, such that the flight control subsystem 202 may comprise feedback-incorporating smart logic that adjusts the tired responses based on this feedback and/or learned stability margins. Still further, the flight control subsystem 202 may also initiate in-flight stability checks by initiating a whirl by tilting the swashplate assemblies 136 and observing responses of the rotor systems 108. Such responses may also be used to adjust the tiered responses of the flight control subsystem when destabilizing hub shears are detected. Furthermore, while control system 200 is discussed in terms of detecting "destabilizing" hub shears that induce whirl flutter, it will be appreciated that control system 200 is configured to detect any level of hub shear present in the rotor hub 122 and/or the rotor mast 120, and flight control subsystem 202 is configured to take appropriate action to control, reduce, and/or eliminate the detected hub shears.

For example, control system 200 may be configured for use in tiltrotor aircraft with soft in-plane and/or stiff in-plane rotor hubs 122. Further, control system 200 may be used in tiltrotor aircraft without a swashplate assembly 136, where the flight control subsystem 202 is configured to adjust pitch of the rotor blades 110 using an electric, hydraulic, and/or electro-mechanical actuator and/or any other mechanism in response to detecting destabilizing hub shears acting on a rotor hub 122 and/or rotor mast 120.

Referring now to Figure 7, a flowchart of a method 300 of controlling a tiltrotor aircraft 100 is shown. Method 300 may begin at block 302 by operating a tiltrotor aircraft in a forward-flight airplane mode. Method 300 may continue at block 304 by detecting a hub shear in a rotor system 108 of the tiltrotor aircraft 100 utilizing at least one of an accelerometer 204, a strain gauge 206, and a sensor 208. In some embodiments, detecting the hub shear in the rotor system 108 may comprise communicating the data sensed by the accelerometers 204, strain gauges 206, and/or sensors 208 to a flight control subsystem 202. In some embodiments, the flight control system 202 may determine if the hub shears are destabilizing or are potentially harmful to the rotor hub 122, rotor mast 102, other components of the rotor system 108, wings 104, and/or any other component of the tiltrotor aircraft 100. This may be accomplished by detecting whirl flutter and/or determining if the hub shear exceeds the stability margins of the rotor systems 108 and/or the tiltrotor aircraft 100. Method 300 may conclude at block 306 by adjusting a component of the tiltrotor aircraft 100 to counteract the hub shears in the rotor system 108. This step may be accomplished in response to the flight control subsystem 202 determining that the hub shears are destabilizing and/or potentially harmful. Additionally, this step may be accomplished by tilting swashplate assemblies 136 of the tiltrotor aircraft 100 to adjust a pitch of rotor blades 110 of the tiltrotor aircraft 100 to stabilize the rotor systems 108 and eliminate whirl flutter.

At least one embodiment is disclosed, and variations, combinations, and/or modifications of the embodiment(s) and/or features of the embodiment(s) made by a person having ordinary skill in the art are within the scope of this disclosure. Alternative embodiments that result from combining, integrating, and/or omitting features of the embodiment(s) are also within the scope of this disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, R₁, and an upper limit, Rᵤ, is disclosed, any number falling within the range is specifically disclosed. In particular, the following numbers within the range are specifically disclosed: R=R₁ +k ^{∗} (Rᵤ-R₁), wherein k is a variable ranging from 1 percent to 100 percent with a 1 percent increment, i.e., k is 1 percent, 2 percent, 3 percent, 4 percent, 5 percent,...50 percent, 51 percent, 52 percent,..., 95 percent, 96 percent, 95 percent, 98 percent, 99 percent, or 100 percent. Moreover, any numerical range defined by two R numbers as defined in the above is also specifically disclosed.

Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims. Each and every claim is incorporated as further disclosure into the specification and the claims are embodiment(s) of the present invention. Also, the phrases "at least one of A, B, and C" and "A and/or B and/or C" should each be interpreted to include only A, only B, only C, or any combination of A, B, and C.

## Claims

1. A control system (200) for a tiltrotor aircraft (100), comprising:
at least one sensor configured to detect destabilizing hub shear indicative of whirl motion in a rotor system (108) when the tiltrotor aircraft (100) experiences chordwise airflow along a static thrust axis (160) of the rotor system (108) during operation of the tiltrotor aircraft (100) in a forward-flight airplane mode; and
a pilot control subsystem operatively coupled to the sensor and configured to receive data related to the detected destabilizing hub shear from the at least one sensor and adjust a pitch of the rotor blades (110) of the rotor system (108) in response to the measured hub shear indicating whirl motion in the rotor system (108).

2. The control system (200) of claim 1, wherein the sensor comprises at least one of i) an accelerometer (204) disposed in a shear plane of a rotor hub (122) of the tiltrotor aircraft (100) and configured to detect acceleration in the shear plane of the rotor hub (122) caused by vibrational displacement, and ii) a strain gauge (206) disposed on a rotor mast (120) of the tiltrotor aircraft (100) and configured to detect deflection in the rotor mast (120).

3. The control system (200) of claim 2, further comprising: a sensor associated with each of the plurality of wings (104) of the tiltrotor aircraft (100) configured to detect bending moments in the wings (104) caused by flapping of the wings (104).

4. A tiltrotor aircraft (100), comprising:
a fuselage (102);
a plurality of wings (104) extending from the fuselage (102), each wing (104) carrying a rotor system (108) comprising a rotor mast (120), a rotor hub (122) operatively coupled to the rotor mast (120), and a plurality of rotor blades (110) operatively coupled to the rotor hub (122); and
the control system (200) of any preceding claim, wherein the at least one sensor is associated with each rotor system (108).

5. The tiltrotor aircraft (100) of claim 4, wherein each rotor system (108) comprises a swashplate assembly (136) operatively coupled to the plurality of rotor blades (110) of the associated rotor system (108) and configured to selectively adjust the pitch of the rotor blades (110) of the associated rotor system (108).

6. The tiltrotor aircraft (100) of claim 5, further comprising: a plurality of actuators (138) operatively coupled to each swashplate assembly (136) and configured to selectively tilt the swashplate to adjust the pitch of the rotor blades (110) of the associated rotor system (108); and
optionally or preferably, wherein the pitch of each of the rotor blades (110) is individually adjustable.

7. The tiltrotor aircraft (100) of any of claims 4 to 6, wherein the pilot control subsystem comprises an algorithm configured to initiate a tiered set of responses when the pilot control subsystem determines that the measured hub shears are harmful to a component of the tiltrotor aircraft (100).

8. The tiltrotor aircraft (100) of claim 7, wherein the pilot control subsystem is configured to reduce engine power to the rotor systems (108) in response to adjusting the pitch of the rotor blades (110) of each rotor system (108) not reducing the hub shears in the rotor systems (108); and
optionally or preferably, wherein the pilot control subsystem is configured to further increase the pitch of the rotor blades (110) simultaneously with reducing the engine power to the rotor systems (108).

9. The tiltrotor aircraft (100) any of claims 4 to 8, wherein the pilot control subsystem is configured initiate in-flight stability checks by initiating a whirl in the rotor systems (108) by tilting the swashplate assemblies (136) and observing responses of the rotor systems (108) by receiving the measured hub shears from the sensors.

10. The control system (200) of any of claims 1 to 3, wherein the pilot control subsystem is configured to reduce engine power to the rotor systems (108) in response to adjusting the pitch of the rotor blades (110) of each rotor system (108) not reducing the hub shears in the rotor systems (108).

11. The control system (200) of any of claims 1 to 3 or of claim 10, wherein the pilot control subsystem is configured to further increase the pitch of the rotor blades (110) simultaneously with reducing the engine power to the rotor systems (108).

12. A method of controlling a tiltrotor aircraft (100), comprising:
operating the tiltrotor aircraft (100) in a forward-flight airplane mode;
detecting a destabilizing hub shear in a rotor system (108) carried by a wing (104) of the tiltrotor aircraft (100) when the tiltrotor aircraft (100) experiences chordwise airflow along a static thrust axis of the associated rotor system (108) during operation of the tiltrotor aircraft (100) in a forward-flight airplane mode; and
adjusting a component of the tiltrotor aircraft (100) to counteract the destabilizing hub shear and resulting whirl flutter in the rotor system (108).

13. The method of claim 12, wherein the measuring the hub shear is accomplished by at least one of an accelerometer (204) disposed in a shear plane of a rotor hub (122) of the rotor system (108) of the tiltrotor aircraft (100) and a strain gauge (206) disposed on a rotor mast (120) of the rotor system (108) of the tiltrotor aircraft (100).

14. The method of claim 13, the method further comprising: determining that the hub shear is harmful to a component of the tiltrotor aircraft (100) by at least one of i) detecting whirl flutter in a rotor system (108) and ii) determining that the hub shear exceeds a stability margin of at least one of the rotor system (108) and the tiltrotor aircraft (100).

15. The method of any of claims 12 to 14, wherein the adjusting the component of the tiltrotor aircraft (100) to counteract the destabilizing hub shear in the rotor system (108) is accomplished by adjusting a pitch of a plurality of rotor blades (110) of the rotor system (108) of the tiltrotor aircraft (100) to stabilize the rotor system (108) and eliminate whirl flutter.

## Patentansprüche

1. Steuersystem (200) für ein Kipprotorflugzeug (100), umfassend:
mindestens einen Sensor, der dazu eingerichtet ist, eine destabilisierende Nabenschere zu erfassen, die auf eine Wirbelbewegung in einem Rotorsystem (108) hinweist, wenn das Kipprotorflugzeug (100) während des Betriebs des Kipprotorflugzeugs (100) in einem Vorwärtsflugzeugmodus einen Luftstrom an der Flügeltiefe entlang einer statischen Schubachse (160) des Rotorsystems (108) erfährt; und
ein Pilotsteuerungssubsystem, das funktionsfähig mit dem Sensor gekoppelt und dazu eingerichtet ist, Daten bezüglich der erfassten destabilisierenden Nabenschere von dem mindestens einen Sensor zu empfangen und als Reaktion auf die gemessene Nabenschere, die auf eine Wirbelbewegung im Rotorsystem (108) hinweist, einen Anstellwinkel der Rotorblätter (110) des Rotorsystems (108) anzupassen.

2. Steuersystem (200) nach Anspruch 1, wobei der Sensor mindestens eines von i) einem Beschleunigungssensor (204), der in einer Scherebene einer Rotornabe (122) des Kipprotorflugzeugs (100) angeordnet und zum Erfassen einer durch Schwingungsverschiebung verursachten Beschleunigung in der Scherebene der Rotornabe (122) eingerichtet ist, und ii) einem Dehnungssensor (206), der an einer Rotorwelle (120) des Kipprotorflugzeugs (100) angeordnet und zum Erfassen einer Auslenkung in der Rotorwelle (120) eingerichtet ist, umfasst.

3. Steuersystem (200) nach Anspruch 2, ferner umfassend: einen Sensor, der mit jedem der Vielzahl von Flügeln (104) des Kipprotorflugzeugs (100) verbunden und zum Erfassen von Biegemomenten in den Flügeln (104) eingerichtet ist, die durch das Schlagen der Flügel (104) verursacht werden.

4. Kipprotorflugzeug (100), umfassend:
einen Rumpf (102);
eine Vielzahl von Flügeln (104), die sich vom Rumpf (102) erstrecken, wobei jeder Flügel (104) ein Rotorsystem (108), das eine Rotorwelle (120), eine Rotornabe (122), die funktionsfähig mit der Rotorwelle (120) gekoppelt ist, und eine Vielzahl von Rotorblättern (110), die funktionsfähig mit der Rotornabe (122) gekoppelt sind, trägt; und
das Steuersystem (200) eines vorhergehenden Anspruchs, wobei der mindestens eine Sensor jedem Rotorsystem (108) zugeordnet ist.

5. Kipprotorflugzeug (100) nach Anspruch 4, wobei jedes Rotorsystem (108) eine Taumelscheibenanordnung (136) umfasst, die funktionsfähig mit der Vielzahl von Rotorblättern (110) des zugehörigen Rotorsystems (108) gekoppelt und dazu eingerichtet ist, den Anstellwinkel der Rotorblätter (110) des zugehörigen Rotorsystems (108) selektiv zu verstellen.

6. Kipprotorflugzeug (100) nach Anspruch 5, ferner umfassend: eine Vielzahl von Stellgliedern (138), die funktionsfähig mit jeder Taumelscheibenanordnung (136) gekoppelt und dazu eingerichtet sind, die Taumelscheibe selektiv zu kippen, um den Anstellwinkel der Rotorblätter (110) des zugehörigen Rotorsystems (108) zu verstellen; und
wahlweise oder vorzugsweise, wobei der Anstellwinkel jedes der Rotorblätter (110) individuell verstellbar ist.

7. Kipprotorflugzeug (100) nach einem der Ansprüche 4 bis 6, wobei das Pilotsteuerungssubsystem einen Algorithmus umfasst, der dazu eingerichtet ist, einen mehrstufigen Satz von Reaktionen einzuleiten, wenn das Pilotsteuerungssubsystem bestimmt, dass die gemessene Nabenschere für eine Komponente des Kipprotorflugzeugs (100) schädlich sind.

8. Kipprotorflugzeug (100) nach Anspruch 7, wobei das Pilotsteuerungssubsystem dazu eingerichtet ist, die Motorleistung für die Rotorsysteme (108) als Reaktion auf das Verstellen des Anstellwinkels der Rotorblätter (110) jedes Rotorsystems (108) zu reduzieren, ohne die Nabenschere in den Rotorsystemen (108) zu reduzieren; und
optional oder vorzugsweise, wobei das Pilotsteuerungssubsystem dazu eingerichtet ist, den Anstellwinkel der Rotorblätter (110) gleichzeitig mit der Reduzierung der Motorleistung an die Rotorsysteme (108) weiter zu erhöhen.

9. Kipprotorflugzeug (100) nach einem der Ansprüche 4 bis 8, wobei das Pilotsteuerungssubsystem dazu eingerichtet ist, Stabilitätskontrollen während des Fluges einzuleiten, indem es durch Kippen der Taumelscheibenanordnungen (136) einen Wirbel in den Rotorsystemen (108) einleitet und durch Empfangen der gemessenen Hubscheren von den Sensoren Reaktionen der Rotorsysteme (108) beobachtet.

10. Steuersystem (200) nach einem der Ansprüche 1 bis 3, wobei das Pilotsteuerungssubsystem dazu eingerichtet ist, als Reaktion auf das Verstellen des Anstellwinkels der Rotorblätter (110) jedes Rotorsystems (108) die Motorleistung für die Rotorsysteme (108) zu reduzieren, ohne die Nabenschere in den Rotorsystemen (108) zu reduzieren.

11. Steuersystem (200) nach einem der Ansprüche 1 bis 3 oder Anspruch 10, wobei das Pilotsteuerungssubsystem dazu eingerichtet ist, den Anstellwinkel der Rotorblätter (110) gleichzeitig mit der Reduzierung der Motorleistung an die Rotorsysteme (108) weiter zu erhöhen.

12. Verfahren zum Steuern eines Kipprotorflugzeugs (100), umfassend:
Betreiben des Kipprotorflugzeugs (100) in einem Vorwärtsflugzeugmodus;
Erfassen einer destabilisierenden Nabenschere in einem Rotorsystem (108), das von einem Flügel (104) des Kipprotorflugzeugs (100) getragen wird, wenn das Kipprotorflugzeug (100) während des Betriebs des Kipprotorflugzeugs (100) in einem Vorwärtsflugzeugmodus einen Luftstrom an der Flügeltiefe entlang einer statischen Schubachse des zugehörigen Rotorsystems (108) erfährt; und
Verstellen einer Komponente des Kipprotorflugzeugs (100), um der destabilisierenden Nabenschere und dem daraus resultierenden Wirbelflattern im Rotorsystem (108) entgegenzuwirken.

13. Verfahren nach Anspruch 12, wobei das Messen der Nabenschere durch mindestens eines von einem in einer Scherebene einer Rotornabe (122) des Rotorsystems (108) des Kipprotorflugzeugs (100) angeordneten Beschleunigungssensor (204) und einem auf einer Rotorwelle (120) des Rotorsystems (108) des Kipprotorflugzeugs (100) angeordneten Dehnungssensors (206) durchgeführt wird.

14. Verfahren nach Anspruch 13, wobei das Verfahren ferner umfasst: Bestimmen, dass die Nabenschere für eine Komponente des Kipprotorflugzeugs (100) schädlich ist, durch mindestens eines von i) Erfassen von Wirbelflattern in einem Rotorsystem (108) und ii) Bestimmen, dass die Nabenschere eine Stabilitätsgrenze von mindestens einem des Rotorsystems (108) und des Kipprotorflugzeugs (100) überschreitet.

15. Verfahren nach einem der Ansprüche 12 bis 14, wobei das Verstellen der Komponente des Kipprotorflugzeugs (100), um der destabilisierenden Nabenschere im Rotorsystem (108) entgegenzuwirken, durch Verstellen eines Anstellwinkels einer Vielzahl von Rotorblättern (110) des Rotorsystems (108) des Kipprotorflugzeugs (100) durchgeführt wird, um das Rotorsystem (108) zu stabilisieren und Wirbelflattern zu beseitigen.

## Revendications

1. Système de commande (200) pour un aéronef convertible (100), comprenant :
au moins un capteur configuré pour détecter un cisaillement de moyeu déstabilisant indiquant un mouvement tourbillonnant dans un système de rotor (108) lorsque l'aéronef convertible (100) subit un flux d'air dans le sens de la corde le long d'un axe de poussée statique (160) du système de rotor (108) pendant le fonctionnement de l'aéronef convertible (100) dans un mode d'avion en vol vers l'avant ; et
un sous-système de commande pilote couplé de manière fonctionnelle au capteur et configuré pour recevoir des données se rapportant au cisaillement de moyeu déstabilisant détecté en provenance du ou des capteurs et pour ajuster un pas des pales de rotor (110) du système de rotor (108) à la suite du cisaillement de moyeu mesuré indiquant un mouvement tourbillonnant dans le système de rotor (108).

2. Système de commande (200) selon la revendication 1, dans lequel le capteur comprend i) un accéléromètre (204) disposé dans un plan de cisaillement d'un moyeu de rotor (122) de l'aéronef convertible (100) et configuré pour détecter une accélération dans le plan de cisaillement du moyeu de rotor (122) provoquée par un déplacement de vibration et/ou ii) une jauge de contrainte (206) disposée sur un mât rotor (120) de l'aéronef convertible (100) et configurée pour détecter une déformation dans le mât rotor (120).

3. Système de commande (200) selon la revendication 2, comprenant en outre : un capteur associé à chaque aile de la pluralité d'ailes (104) de l'aéronef convertible (100) configuré pour détecter des moments de pliage dans les ailes (104) provoqués par le battement des ailes (104).

4. Aéronef convertible (100) comprenant :
un fuselage (102) ;
une pluralité d'ailes (104) s'étendant depuis le fuselage (102), chaque aile (104) comportant un système de rotor (108) comprenant un mât rotor (120), un moyeu de rotor (122) couplé de manière fonctionnelle au mât rotor (120) et une pluralité de pales de rotor (110) couplées de manière fonctionnelle au moyeu de rotor (122) ; et
le système de commande (200) selon l'une quelconque des revendications précédentes, dans lequel le ou les capteurs sont associés à chaque système de rotor (108).

5. Aéronef convertible (100) selon la revendication 4, dans lequel chaque système de rotor (108) comprend un ensemble plateau oscillant (136) couplé de manière fonctionnelle à la pluralité de pales de rotor (110) du système de rotor associé (108) et configuré pour ajuster de manière sélective le pas des pales de rotor (110) du système de rotor associé (108).

6. Aéronef convertible (100) selon la revendication 5, comprenant en outre : une pluralité d'actionneurs (138) couplés de manière fonctionnelle à chaque ensemble plateau oscillant (136) et configurés pour incliner de manière sélective le plateau oscillant pour ajuster le pas des pales de rotor (110) du système de rotor associé (108) ; et
facultativement ou de préférence, dans lequel le pas de chaque pale de rotor des pales de rotor (110) peut être ajusté de manière individuelle.

7. Aéronef convertible (100) selon l'une quelconque des revendications 4 à 6, dans lequel le sous-système de commande pilote comprend un algorithme configuré pour initier un ensemble de réponses à plusieurs niveaux lorsque le sous-système de commande pilote détermine que les cisaillements de moyeu mesurés sont dangereux pour un composant de l'aéronef convertible (100).

8. Aéronef convertible (100) selon la revendication 7, dans lequel le sous-système de commande pilote est configuré pour réduire la puissance du moteur des systèmes de rotor (108) à la suite de l'ajustement du pas des pales de rotor (110) de chaque système de rotor (108) ne réduisant pas les cisaillements de moyeu dans les systèmes de rotor (108) ; et
facultativement ou de préférence, dans lequel le sous-système de commande pilote est configuré pour augmenter davantage le pas des pales de rotor (110) simultanément à une réduction de la puissance du moteur des systèmes de rotor (108).

9. Aéronef convertible (100) selon l'une quelconque des revendications 4 à 8, dans lequel le sous-système de commande pilote est configuré pour initier des contrôles de stabilité en vol en initiant un tourbillon dans les systèmes de rotor (108) en inclinant les ensembles plateaux oscillants (136) et en observant des réponses des systèmes de rotor (108) en recevant les cisaillements de moyeu mesurés en provenance des capteurs.

10. Système de commande (200) selon l'une quelconque des revendications 1 à 3, dans lequel le sous-système de commande pilote est configuré pour réduire la puissance du moteur des systèmes de rotor (108) à la suite du fait que l'ajustement du pas des pales de rotor (110) de chaque système de rotor (108) ne réduit pas les cisaillements de moyen dans les systèmes de rotor (108).

11. Système de commande (200) selon l'une quelconque des revendications 1 à 3 ou selon la revendication 10, dans lequel le sous-système de commande pilote est configuré pour augmenter davantage le pas des pales de rotor (110) simultanément à une réduction de la puissance du moteur des systèmes de rotor (108).

12. Procédé de commande d'un aéronef convertible (100) consistant :
à faire fonctionner l'aéronef convertible (100) dans un mode avion en vol vers l'avant ;
à détecter un cisaillement de moyeu déstabilisant dans un système de rotor (108) porté par une aile (104) de l'aéronef convertible (100) lorsque l'aéronef convertible (100) subit un flux d'air dans le sens de la corde le long d'un axe de poussée statique du système de rotor associé (108) pendant le fonctionnement de l'aéronef convertible (100) dans un mode d'avion en vol vers l'avant ; et
à régler un composant de l'aéronef convertible (100) pour contrebalancer le cisaillement de moyeu déstabilisant et le flottement de giration résultant dans le système de rotor (108).

13. Procédé selon la revendication 12, dans lequel le cisaillement de moyeu est réalisé par un accéléromètre (204) disposé dans un plan de cisaillement d'un moyeu de rotor (122) du système de rotor (108) de l'aéronef convertible (100) et/ou par une jauge de contrainte (206) disposée sur un mât rotor (120) du système de rotor (108) de l'aéronef convertible (100).

14. Procédé selon la revendication 13, le procédé consistant en outre : à déterminer que le cisaillement de moyeu est dangereux pour un composant de l'aéronef convertible (100) i) en détectant un flottement de giration dans un système de rotor (108) et/ou ii) en déterminant que le cisaillement de moyeu dépasse une marge de stabilité du système de rotor (108) et/ou de l'aéronef convertible (100).

15. Procédé selon l'une quelconque des revendications 12 à 14, dans lequel le réglage du composant de l'aéronef convertible (100) pour contrebalancer le cisaillement de moyeu déstabilisant dans le système de rotor (108) est réalisé en ajustant un pas d'une pluralité de pales de rotor (110) du système de rotor (108) de l'aéronef convertible (100) pour stabiliser le système de rotor (108) et pour éliminer le flottement de giration.
